(19) Europäisches Patentamt
European Patent Office
Office européen des brevets

(11) Veröffentlichungsnummer: **0 103 231**
**B1**

(12) **EUROPÄISCHE PATENTSCHRIFT**

(45) Veröffentlichungstag der Patentschrift: **28.09.88**

(51) Int. Cl.$^4$: **C 08 L 69/00,** C 08 L 85/02, C 08 K 5/03, C 08 K 7/14

(21) Anmeldenummer: **83108514.7**

(22) Anmeldetag: **30.08.83**

# (54) Flammwidrige Polymermischungen.

(30) Priorität: **10.09.82 DE 3233617**

(43) Veröffentlichungstag der Anmeldung:
**21.03.84 Patentblatt 84/12**

(45) Bekanntmachung des Hinweises auf die Patenterteilung:
**28.09.88 Patentblatt 88/39**

(84) Benannte Vertragsstaaten:
**DE FR GB IT NL**

(56) Entgegenhaltungen:
**EP-A-0 005 053**
**EP-A-0 034 697**
**AT-B- 324 713**
**DE-A-1 800 625**
**DE-A-2 701 493**
**DE-A-2 918 882**
**US-A-3 673 278**
**US-A-4 223 100**

(73) Patentinhaber: **BAYER AG**
**Konzernverwaltung RP Patentabteilung**
**D-5090 Leverkusen 1 Bayerwerk (DE)**

(72) Erfinder: **Serini, Volker, Dr.**
**Scheiblerstrasse 81**
**D-4150 Krefeld (DE)**
Erfinder: **Nouvertné, Werner, Dr.**
**Scheiblerstrasse 95**
**D-4150 Krefeld (DE)**
Erfinder: **Freitag, Dieter, Dr.**
**Hasenheide 10**
**D-4150 Krefeld (DE)**

**EP 0 103 231 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft flammwidrige Polymerischungen die dadurch gekennzeichnet sind, daß sie

a) 25—99,5 Gew.-% eines Polycarbonats, dessen lineare Ketten zu mindestens 85 Mol-% aus wiederkehrenden Struktureinheiten der Formel (1)

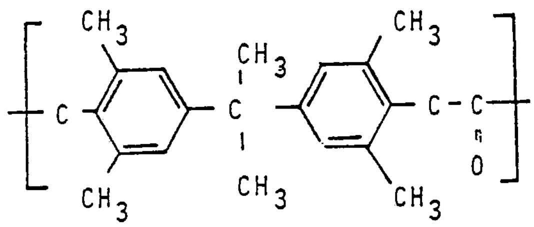

(1)

und zu höchstens 15 Mol-% aus wiederkehrenden Einheiten der Formel (2)

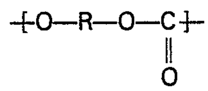

(2),

in der

—R— für o-, m- oder p- oder Phenylenrest oder einen Rest der Formel (2 a) steht,

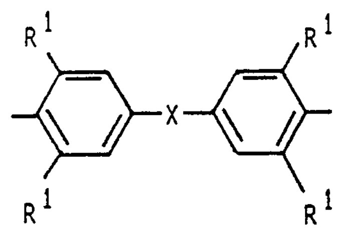

(2a)

in welcher

$R^1$ für Wasserstoff, Halogen wie Chlor und Brom und $C_1$—$C_3$-Alkyl steht und

X für einen $C_1$—$C_5$-Alkylen- oder Alkylidenrest, einen $C_3$—$C_6$-Cycloalkylen- oder Cycloalkylidenrest, eine Einfachbindung, —S— oder einen Rest der Formel (2 b) steht,

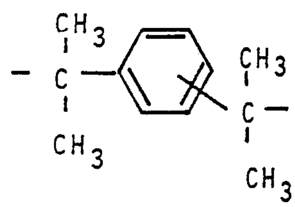

(2b)

in welcher die beiden Alkylsubstituenten in o-, m- oder p-Stellung zueinander stehen können, oder für einen Rest der Formel (2 c) steht,

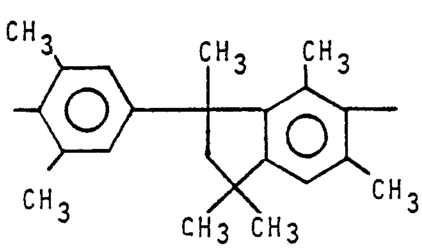

(2c)

wobei Einheiten der Formel (1) nicht umfaßt sind,

bestehen,

b) 0,5 bis 75 Gew.% eines verzweigten Polyphosphats mit Molekulargewichten Mw (gemessen durch Gelchromatographie, Eichung mit Bisphenol-A-Polycarbonat) von 1600 bis 150 000 und relativen Viskositäten von µ rel von 1.01 bis 1.20, erhalten durch Umsetzung von mindestens 60 Mol.% vorzugsweise mindestens 85 Mol.% und insbesondere 100 Mol.% an Bis-(3.5-dimethyl-4-hydroxyphenyl)-methan und/oder Bis-(3.5-dimethyl-4-hydroxyphenyl)-propan und maximal 40 Mol.% vorzugsweise maximal 15 Mol.% und insbesondere 0 Mol.% an Diolen der Formel 17,

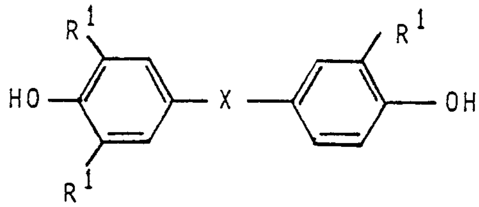

(17)

worin

X einen $C_1$—$C_5$-Alkylen- oder Alkylidenrest, einen $C_5$—$C_6$-Cycloalkylen- oder Cycloalkylidenrest, eine Einfachbindung, —S— oder

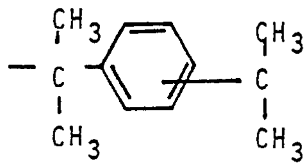

und $R^1$ H oder $CH_3$ bedeutet, und/oder der Formel (18)

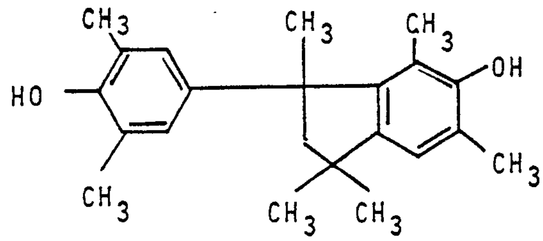

(18)

mit Phosphorsäureestern der Formel (19)

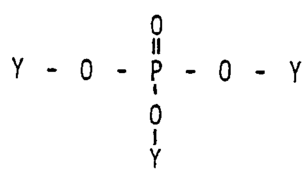

(19)

worin

Y Alkyl-, Cycloalkyl-, Aryl oder Alkylaryl-Reste bedeuten und gleich oder ungleich sein können, in Molverhaltnis aromatisches Diol/Phosphat von 0.66/1 bis 2.3/1 in Gegenwart basischer Alkali=oder Erdalkaliverbindungen unter Abspaltung von Alkohol bzw. Phenol bei Temperaturen von 100°C bis 350°C, und

c) 0—20 Teile einer oder mehrerer organischer Chlor und/oder Bromverbindungen, die nur aromatisch gebundenes Chlor und/oder Brom enthalten, eine Zersetzungstemperatur oberhalb 250°C aufweisen und bis mindestens 300°C bei Normaldruck nicht sieden, und

d) 0—100 Teile Glasfasern und

e) 0—1 Teil Polytetrafluorethylen

enthalten,

wobei sich die Teile der jeweiligen Komponente c, d und e auf die Summe von a) und b) beziehen (Teile = Teile zu c), d) oder e) pro hundert Teile der Summe a) + b)).

Das unter a) genannte Polycarbonat ist entweder ein Copolycarbonat mit mindestens 85 Gew.-% aus wiederkehrenden Struktureinheiten der Formel (1) und höchstens 15 Gew.-% aus wiederkehrenden Struktureinheiten der Formel (2) oder ein Polycarbonat nur aus wiederkehrenden Struktureinheiten der Formel (1).

Den Struktureinheiten der Formel (1) liegt das 2,2-Bis(3,5-dimethyl-4-hydroxyphenyl)-propan zugrunde.

Den Struktureinheiten der Formel (2) liegen beispielsweise aromatische Dihydroxyverbindungen wie: Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-sulfone, α,α-Bis-(hydroxyphenyl)-diisopropylbenzole, sowie deren kernalkylierte und kernhalogenierte Verbindungen zugrunde.

Geeignete aromatische Dihydroxyverbindungen sind z.B. in US—PS 3 028 365, 2 999 835, 3 148 172, 3 271 368, 2 991 273, 3 271 367, 3 780 078, 3 014 891, 2 999 846, in DE—OS 2 063 050, 2 211 957, 1 570 703,

2 329 585, 2 329 646, in der Monographie "Hermann Schnell, Chemistry and Physics of Polycarbonates, Polymer Reviews, Volume 9, Inerscience Publishers, New York, 1964" beschrieben.

Bei der Herstellung der Polycarbonate werden vorzugsweise Rohbisphenole eingesetzt, wie sie aus 2,6-Dimethylphenol nach den Verfahren der DE—OS 2 928 464 und der DE—OS 2 928 443 hergestellt werden können. In diesem Fall können bis zu 15 Gew.-% Nebenprodukte im Reaktionsgemisch enthalten sein. Dieses Reaktionsgemisch kann ohne vorherige Reinigung bei der Herstellung der Polycarbonate eingesetzt werden.

Bevorzugte Polycarbonate mit wiederkehrenden Struktureinheiten der Formel (1) enthalten mindestens 90 Gew.-% dieser Struktureinheiten. Ganz besonders bevorzugt sind Polycarbonate, die ausschließlich wiederkehrende Struktureinheiten der Formel (1) enthalten.

Die Herstellung erfindungsgemäß einsetzbarer Polycarbonate erfolgt nach bekannten Verfahren, beispielsweise nach der DE—OS 2 063 050, 2 211 957, 2 901 665, und 2 901 668. Diese Polycarbonate besitzen Molekulargewichte $\overline{M}_w$ (Gewichtsmittel) von 10 000—200 000, bevorzugt von 20 000—80 000, besonders bevorzugt von 25 000—60 000 und ganz besonders bevorzugt von 30 000—45 000.

Für die Einstellung der gewünschten Molekulargewichte $\overline{M}_w$ der erfindungsgemäß einsetzbaren aromatischen Polycarbonate können Kettenabbrecher in üblichen Mengen verwendet werden. Geeignete Kettenabbrecher sind beispielsweise Phenole, wie Phenol, o-, m-, p-Kresol, 2,6-Dimethylphenol, p-tertiär-Butylphenol und p-Isooctylphenol.

Die erfindungsgemäß einsetzbaren Polycarbonate können verzweigt sein. Dies wird durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen erreicht. Als dreifunktionelle Verbindungen werden vorzugsweise solche mit drei oder mehr als drei phenolischen Hydroxygruppen eingesetzt. Die Herstellung dieser verzweigten Polycarbonaten ist z.B. in DE—OS 1 570 533, 1 596 762, 1 116 974, 2 113 347, GB—PS 1 079 821, 1 476 108 und US—PS 3 544 514 beschrieben.

Verzweigte erfindungsgemäß verwendbare Polyphosphate werden durch Umsetzung von aromatischen Diolen mit Phosphorsäureestern in Gegenwart von basischen Erdalkali- bzw. Alkaliverbindungen hergestellt. Dabei wird die Umsetzung der aromatischen Diole mit den Phosphorsäureestern im allgemeinen wie folgt vorgenommen:

Der Phosphorsäureester wird vorgelegt und falls er als Feststoff vorliegt, aufgeschmolzen. Zu dem flüssigen Phosphorsäureester wird das aromatische Diol gegeben und unter Erwärmen gelöst. Dann wird die basische Alkali- oder Erdalkaliverbindung als Katalysator zugegeben. Bei erhöhter Temperatur setzt dann die Abspaltung von Alkohol bzw. Phenol ein. Der abgespaltene Alkohol bzw. das abgespaltene Phenol wird abdestilliert. Zurück bleibt das entstandene Polyphosphat.

Bei Einsatzt mehrerer aromatischer Diole oder mehrerer Phosphorsäureester wird analog verfahren. Die Reihenfolge des Zusammengebens der Ausgangskomponenten kann anders sein, als oben beschrieben. Auch ist für die Reaktion eine Löslichkeit der Komponenten ineinander nicht unbedingt notwendig, wenn auch günstig. Der Zugabezeitpunkt des Katalysators nach dem Aufschmelzen der Ausgangskomponenten ist nicht kritisch. Die Zugabe kann vor oder während des Aufschmelzens von Ausgangskomponenten erfolgen. Es kann von Nutzen sein, noch während der Reaktion Katalysator nachzugeben, um eine ausreichende Reaktionsgeschwindigkeit aufrechtzuerhalten. Der Katalysator braucht nicht oder nicht voll in der Reaktionsmischung gelöst zu sein, obwohl dies für die Reaktion und die Qualität des erhaltenen Produktes günstig sein kann.

Das Aufschmelzen der Ausgangskomponenten erfolgt im allgemeinen bei Temperaturen von 50—300°C, bevorzugt bei 100—250°C, besonders bevorzugt bei 125—225°C.

Die Zugabe des Katalysators erfolgt bevorzugt nach Aufschmelzen der Ausgangskomponenten. Besonders günstig für den Start und den Fortgang der Raktion ist eine Zugabe des Katalysators bei 100—250°C, bevorzugt bei 125—225°C.

Die Reaktionstemperatur wird so niedrig wie möglich gehalten. Im allgemeinen liegt sie bei 100—350°C, bevorzugt bei 125—300°C, besonders bevorzugt bei 150 bis 250°C. Die Reaktionstemperatur liegt in der Anfangsphase, in der der Hauptteil des Alkohols bzw. Phenols (ca. 90%) abgespalten wird, bei möglichst niedriger Temperatur, bevorzugt bei 100—250°C, besonders bevorzugt bei 125—250°C.

Die Polykondensation erfolgt mit Vorteil unter vermindertem Druck, da hierdurch der abgespaltene Alkohol bzw. das abgespaltene Phenol schnell aus dem Reaktionsgleichgewicht entfernt wird. Im allgemeinen wird bei Drucken zwischen 600 und 0,01 mm Hg, bevorzugt bei Drucken zwischen 400 und 0,025 Hg, besonders bevorzugt bei Drucken zwischen 250 und 0,05 mm Hg gearbeitet.

Während in allgemeinen die Abspaltung der Hauptmenge des Alkohols bzw. Phenols (ca. 90%) bei 600 bis 10 mm Hg erfolgt, werden die Restmengen bei 10 bis 0,01 mm Hg abdestilliert. Etwa notwendig werdender Druckausgleich wird mit Inertgas geschaffen, wie z.B. $CO_2$ oder $N_2$, so daß Luftsauerstoff von dem Reaktionsmedium ferngehalten wird. Auch das Aufschmelzen der Reaktanden erfolgt im allgemeinen unter Inertgas.

Der Restgehalt an abgespaltenem Alkohol bzw. Phenol im Polyphosphat beträgt im allgemeinen unter 2%, bevorzugt unter 1%, besonders bevorzugt unter 0,5% und ganz besonders bevorzugt unter 0,1%, bezogen auf das erhaltene Polyphosphat.

Bei der Umsetzung aromatischer Diole mit Phosphaten serden im allgemeinen 1,0—0,0001, bevorzugt 0,5—0,0005, besonders bevorzugt 0,05—0,0005 Mol Alkali oder Erdalkali/Mol Phosphat eingesetzt.

Der Ausdruck Alkali bzw. Erdalkali bezieht sich auf die Elemente, z.B. Li, Na, K, Ca und Ba in den basischen Alkali oder Erdalkaliverbindungen. Bei Einsatz hoher Alkali- oder Erdalkalimenger ist wegen der erhöhten Abspaltgeschwindigkeit des Alkohols bzw. des Phenols bei besonders niedriger Temperatur und bei nur leicht reduziertem Druck mit der Polykondensation zu beginnen.

Die erfindungsgemäßen Polyphosphate enthalten ionische Gruppen, die dadurch entstehen können, daß endständige OH-Gruppen durch Reaktion mit basischen Verbindungen z.B. durch Reaktion mit den als Katalysator eingesetzten Erdalkali- oder Alkaliverbindungen Salze, z.B. $—O^{\ominus}Me^{\oplus}$, $—O^{\ominus}1/2\ Me^{\oplus\oplus}$ bilden ($Me^{\oplus}$ bedeutet z.B. Alkaliionen wie $Li^{\oplus}$, $Na^{\oplus}$, $K^{\oplus}$ und $Me^{\oplus\oplus}$ z.B. Erdalkaliionen wie $Ca^{\oplus\oplus}$, $Ba^{\oplus\oplus}$).

Bei der Herstellung der erfindungsgemäßen verwendbaren Polyphosphate werden die aromatischen Diole und die monomeren Phosphate im Verhältnis 0,66/1—2,3/1 Molteile eingesetzt. Bevorzugt werden Verhältnisse von 0,66/1—0,96/1 und 2,3/1—1,6/1, besonders bevorzugt werden Verhältnisse von 0,75/1—0,96/1 und 2,2/1—1,6/1, ganz besonders bevorzugt werden Verhältnisse von 0,8/1—0,92/1 und 2,1/1—1,7/1.

Die Anzahl der ionischen Gruppen hängt von der eingesetzten Katalysatorsysteme ab. Im allgemeinen werden Polyphosphate bevorzugt, die ionische Gruppen entsprechend der bevorzugt eingesetzten Katalysatorsysteme aufweisen. In besonderen Fällen jedoch kann es erwünscht sein, den Gehalt an ionischen Gruppen auf ein besonders hohes oder besonders niedriges Maß zu bringen. Im ersteren Falle werden dan bei der Polykondensation besonders hohe, im zweiten Falle besonders niedrige Katalysatormengen verwendet.

Auch durch Zusatz von basenbindenden Substanzen kann der Gehalt an ionischen Gruppen beeinflußt und zwar herabgesetzt werden. Solche basenbindenden Substanzen sind beispielsweise Dialkylsulfate wie Dimethylsulfat, Diethylsulfat oder organische Säuren wie Toluolsulfonsäure. Im allgemeinen werden diese Verbindungen in der gewünschten Menge gegen Schluß der Polykondensation in die Polymerschmelze gegeben. Danach wird dann noch eine für die Umsetzung dieser Substanzen mit den ionischen Gruppen ausreichende Reaktionszeit vor Beendigung der Kondensation eingehalten.

Die erfindungsgemäß verwendbaren Polyphosphate können bei 20°C zähflüssige oder mehr oder weniger plastische Harze darstellen. Sie Weisen dann Glastemperaturen unter 20°C auf. Sie können auch vorzugsweise harte thermoplastische Harze darstellen, die Glastemperaturen $T_g$ über 20°C besitzen. Besonders bevorzugt sind solche mit Glastemperaturen $T_g$ über 40°C, ganz besonders bevorzugt die mit Glastemperaturen über 60°C, insbesondere über 70°C.

Die in dieser Erfindung eingesetzten Polyphosphate haben im allgemeinen fiktive Molekulargewichte $\overline{M}_w$ (gemessen durch Gelchromatographie, Eichung mit Bispheno A-Polycarbonat) von 1600—15 000, bevorzugt von 2300—50 000, besonders bevorzugt von 3200—25 000 und ganz besonders bevorzugt von 5000—20 000.

Die mittleren Polykondensationsgrade $\overline{P}$ der eingesetzten Polyphosphate liegen im allgemeinen bei $\overline{P}$ = 3—30, bezogen auf Phosphatgruppen im Polyphosphat. Bevorzugt werden Polykondensationsgrade von $\overline{P}$ = 4—25, besonders bevorzugt 7—20.

Die relative Viskosität der eingesetzten Polyphosphate liegt im allgemeinen bei 1,01—1,20, bevorzugt bei 1,02—1,18, besonders bevorzugt bis 1,03—1,15 (gemessen in $CH_2Cl_2$, c = 0,5 g/l).

Aromatische Diole der Formel (17) sind beispielsweise:
2,2-Bis-(4-hydroxyphenyl)-propan,
2,2-Bis-(4-hydroxyphenyl)-butan,
2,4-Bis-(4-hydroxyphenyl)-2-methylbutan,
1,1-Bis-(4-hydroxyphenyl)-cyclohexan,
Bis-(4-hydroxyphenyl)-sulfid,
α,α'-Bis-(4-hydroxyphenyl)-p-diisopropylbenzol,
2-(3-Methyl-4-hydroxyphenyl)-2-(4-hydroxyphenyl)-propan,
2,2-Bis-(3-methyl-4-hydroxyphenyl)-propan,
2-(3,5-Dimethyl-4-hydroxyphenyl)-2-(4-hydroxyphenyl)-propan,
2-(3-Methyl-4-hydroxyphenyl)-2-(3,5-dimethyl-4-hydroxyphenyl)-propan.

Besonders bevorzugt sind von den aromatischen Diolen der Formel (17) die, in denen R zumindest teilweise $CH_3$ bedeutet, insbesondere jedoch, wenn zwei Methylgruppen orthoständig zu einer phenolischen OH-Gruppe liegen, und das aromatische Diol der Formel (18).

Bevorzugt werden auch Polyphosphate, denen Rohbisphenole zugrundeliegen wie sie aus 2,6-Dimethylphenol nach den Verfahren der DE—OS 2 928 464 und 2 928 443 hergestellt werden können, wobei auch technisches Kresol verwendet werden kann.

Die für die Herstellung der erfindungsgemäß verwendbaren Polyphosphate benötigten Phosphorsäureester haben die folgende Formel (19)

```
            O
            ‖
Y - O - P - O - Y        (19)
            |
            O
            |
            Y
```

in der

Y Alkyl, Cycloalkyl, Aryl, Alkylarylreste, die gleich oder ungleich sein können,

bedeutet.

Die Reste Y können substituiert sein, z.B. mit Halogen.

Beispiele für solche Alkylgruppen sind: Methyl, Ethyl, Propyl, Butyl, Pentyl, Hexyl, Heptyl, Octyl, Nonyl, Decyl, Undecyl, Dodecyl und deren Isomere, so beispielsweise Neopentyl, 3,5,5-Trimethylhexyl, 3-Methylhexyl, 2-Ethylhexyl, 2,5,5-Trimethylhexyl, weiterhin Cycloalkylgruppen wie Cyclohexyl, Halogenalkyl wie 2-Chlorethyl und 2,3-Dibrompropyl.

Beispiele für Aryl- und Alkylrylreste sind: Phenyl, o-, m-, p-Methylphenyl, 2,6-Dimethylphenyl, 2,4-Dimethylphenyl, 2,4,6-Trimethylphenyl, Diphenyl, 2- und 4-Isopropylphenyl, Nonylphenyl, 4-tert.-Butylphenyl, 4-Chlorphenyl, 2,4,6-Trichlorphenyl, 4-Bromphenyl, 2,4,6-Tribromphenyl, Naphthyl, Benzyl.

Von den genannten Resten Y werden die Arylreste bevorzugt, insbesondere die halogenfreien. Von diesen wiederum werdie die Phenyl-, die o-, m-, p-Methylphenyl- und die 2,6-Dimethylphenylreste besonders bevorzugt.

Phosphorsäureester der Formel (19) sind beispielsweise:

Bis-(phenyl)-methylphosphat,
Bis-(ethyl)-phenylphosphat,
Bis-(ethyl)-2,6-dimethylphosphat,
Bis-(phenyl)-ethylphosphat,
Tris-(2-Chlorethyl)-phosphat,
Bis-(phenyl)-2-chlorethylphosphat,
Bis-(Butyl)-phenylphosphat,
Bis-(phenyl)-butylphosphat,
Bis-(neopentyl)-phenylphosphat,
Bis-(4-methylphenyl)-2-ethylhexylphosphat,
Bis-(2-ethylhexyl)-phenylphosphat,
Bis-(2-ethylhexyl)-4-methylphenylphosphat,
Bis-(phenyl)-2-ethylhexylphosphat,
Tris-(octyl)-phosphat,
Bis-(phenyl)-octylphosphat,
Bis-(octyl)-phenylphosphat,
Bis-(3,5,5-trimethylhexyl)-phenylphosphat,
Bis-(2,5,5-trimethylhexyl)-4-methylphenylphosphat,
Bis-(phenyl)isodecylphosphat,
Bis-(dodecyl)-4-methylphenylphosphat,
Bis-(dodecyl)-phenylphosphat,
Tris-(phenyl)-phosphat,
Tris-(2-methylphenyl)-phosphat,
Tris-(4-methylphenyl)-phosphat,
Bis-(2-methylphenyl)-phosphat,
Bis-(4-methylphenyl)-phosphat,
Bis-(phenyl)-2-methylphenylphosphat,
Bis-(phenyl)-4-methylphenylphosphat,
Tris-(isopropylphenyl)-phosphat,
Bis-(isopropylphenyl)-phenylphosphat,
Bis-(phenyl)-isopropylphenylphosphat,
Tris-(nonylphenyl)-phosphat,
Tris-(2,6-dimethylphenyl)-phosphat,
Bis-(2,6-dimethylphenyl)-phenylphosphat,
Bis-(phenyl)-2,6-dimethylphenylphosphat,
Bis-(2,6-dimethylphenyl)-4-tert.-butylphenylphosphat,
Bis-(2,6-dimethylphenyl)-4-methylphenylphosphat,
Bis-(2,6-dimethylphenyl)-3-methylphenylphosphat,
Bis-(2,6-dimethylphenyl)-4-isopropylphenylphosphat und
Bis-(2,6-dimethylphenyl)-2-isopropylphenylphosphat.

Bevorzugte Phosphorsäurester der Formel (19) sind die Triarylester. Besonders bevorzugte Phosphorsäureester der Formel (19) sind die Triarylester mit drei gleichen Arylresten oder mit mindestens zwei 2,6-Dimethylphenylresten wie

Tris-(phenyl)-phosphat,
Tris-(2-methylphenyl)-phosphat,
Tris-(4-methylphenyl)-phosphat,
Tris-(isopropylphenyl)-phosphat,
Tris-(2,6-dimethylphenyl)-phosphat,
Bis-(2,6-dimethylphenyl)-phenylphosphat,
Bis-(2,6-dimethylphenyl)-2-methylphenylphosphat,

Bis-(2,6-dimethylphenyl)-4-methylphenylphosphat und
Bis-(2,6-dimethylphenyl)-isopropylphenylphosphat.

Besonders bevorzugte Triarylester sind das Triphenylphosphat und auch das Tri-(2,6-dimethylphenyl)-phosphat.

Für die Herstellung der erfindungsgemaß eingesetzten Polyphosphate werden als Katalysatoren basisch wirkende anorganische oder organische Alkali- oder Erdalkaliverbindungen verwendet. Solche Verbindungen sind beispielsweise:

Metalle, wie z.B. Li, Na, K, Ca; Hydride, wie LiH, NaH, KH, $CaH_2$; Oxide wie $LiO_2$, $Na_2O$, $K_2O$, CaO, BaO; Hydroxide wie LiOH, NaOH, KOH, $Ba(OH)_2$, $Sr(OH)_2$, $Ca(OH)_2$; Alkaliborhydride wie $NaBH_4$; Amide der Alkalimetalle, wie Li-, Na- und K-amid; Alkali- und Erdalkalialkoholate wie Methylate, Ethylate, Propylate, Butylate, Cyclohexanolate des Li, Na, K oder Ca; Phenolate wie die Li-, Na-, K-Salze des Phenols, des o-, m-, p-Kresols, 2,6-Dimethylphenol; Bis-Alkalisalze von aromatischen Dihydroxyverbindungen, wie die Li-, Na- und K-Salze des 2,2-Bis-(4-hydroxyphenyl)-propans, oder des 2,2-Bis-(3,5-dimethyl-4-hydroxyphenyl)-propans.

Bevorzugt werden die Alkaliverbindungen und von diesen die Na- und K-Verbindungen. Besonders bevorzugt werden davon wiederum die Hydroxide, Alkoholate, Phenolate und Bisphenolate. Ganz besonders bevorzugt wied das Na-Phenolat.

Als organische Chlor- und/oder Bromverbindungen werden erfindungsgemäß Verbindungen eingesetzt, die nur aromatisch gebundenes Chlor oder Brom enthalten, Zersetzungstemperaturen oberhalb von 250°C aufweisen und bei Normaldruck bis mindestens 300°C nicht sieden.

Bevorzugt eingesetzte Chlor- und Bromverbindungen sind beispielsweise:

1. Chlorierte und bromierte Diphenole wie Octachlordiphenyl, Decachlordiphenyl, Octabromdiphenyl, Decabromdiphenyl.

2. Chlorierte und bromierte Diphenylether wie Octa- und Decachlordiphenylether und Octa- und Decabromdiphenylether.

3. Chloriertes und bromiertes Phthalsäureanhydrid und seine Abkömmlinge wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor- und N,N'-Ethylen-bis-tetrabromphthalimid.

4. Chlorierte und bromierte Bisphenole, wie 2,2-Bis-(3,5-dichlor-4-hydroxyphenyl)-propan und 2,2-Bis-(3,5-dibrom-4-hydroxyphenyl)-propan.

5. 2,2-Bis-(3,5-dichlor-4-hydroxyphenyl)-propan-Oligocarbonat und 2,2-Bis-(3,5-dibrom-4-hydroxyphenyl)propan-Oligocarbonat mit einem mittleren Polykondensationsgrad von 2—20.

6. Chlorierte und bromierte Polystyrole.

7. Chloriertes und bromiertes Polyphenylenoxid.

Von diesen aromatischen Chlor- und Bromverbindungen sind die Bromverbindungen bevorzugt.

Von den bevorzugten aromatischen Bromverbindungen sind besonders bevorzugt Decabromdiphenylether, N,N'-Ethylen-bis-tetrabromphthalimid und 2,2-Bis-(3,5-dibrom-4-hydroxyphenyl)-propan-Oligocarbonat.

Erfindungsgemäß kann käufliches Polytetrafluorethylen eingesetzt werden, vorteilhaft in pulvriger, feinteiliger Form.

In den flammwidrigen Polymermischungen dieser Erfindung werden Polycarbonatgehalte von 25—99,5 Gew.-%, bevorzugt von 50—98 Gew.-%, besonders bevorzugt 60—93 Gew.-% und ganz besonders bevorzugt von 65—90 Gew.-% eingesetzt.

Die Gehalte an Polyphosphat in den flammwidrigen Polymermischungen dieser Erfindung betragen 0,5—75 Gew.-%, bevorzugt 2—50 Gew.-%, besonders bevorzugt 7—40 Gew.-% und ganz besonders bevorzugt 10—35 Gew.-%.

Die Angabe Gew.-% bezieht sich auf die Bestandteile Polycarbonat und Polyphosphat, sie ergänzen sich als zu 100 Gew.-%.

Die Chlor- oder Bromverbindungen als Zusätze werden bis zu 20 Teilen eingesetzt, bevorzugt zu 0,5—10 Teilen und besonders bevorzugt zu 1—7 Teilen.

Die Glasfasern werden zu 0—100 Teilen eingesetzt, bevorzugt zu 10—80 Teilen, besonders bevorzugt zu 20—70 Teilen zugesetzt.

Polytetrafluorethylen wird bis zu 1 Teil, bevorzugt zu 0,01—0,5 Teilen, besonders bevorzugt zu 0,05—0,2 Teilen zugesetzt.

Die erfindungsgemäßen Polymermischungen zeigen zeigen eine gute Brandwidrigkeit und eine geringe Abtropfneigung in der Flamme. Sie lassen sich thermoplastisch verarbeiten und sind verarbeitungsstabil und fließfähig in der Schmelze.

Die Verarbeitungsstabilität äußert sich beispielsweise in geringer Verfärbungsneigung und geringer Neigung zur Abspaltung von Gasen, so daß auch bei hoher Verarbeitungstemperatur keine Verfärbungen oder Schlieren an den Formteilen auftreten. Die Oberflächengüte ist gut und die elektrostatische Aufladbarkeit gering.

Die erfindungsgemäßen Polymermischungen können auch über ihre Lösung vorteilhaft verarbeitet werden. Auf diese Weise lassen sich z.B. Folien herstellen.

Weitere vorteilhafte Eigenschaften der erfindungsgemäßen Polymermischungen sind ihre hohe Wärmestandfestigkeit, Hydrolysestabilität, mögliche Transparenz und Zusammenfließnahtfestigkeit.

Weiterhih sind sie gut bedruckbar und zeigen eine gute Haftung, z.B. an glatten Oberflächen beispielsweise an Metallen.

Die hervorrangenden Eigenschaften der flammwidrigen Polymermischungen dieser Erfindung sind zum Teil dadurch bedingt, daß die erfindungsgemäß einsetzbaren Polycarbonate und verzweigten Polyphosphate überraschend verträglich sind. Die Verträglichkeit geht so weit, daß insbesondere die als bevorzugt genannten verzweigten Polyphosphate mit den Polycarbonaten dieser Erfindung einphasige Mischungen ergeben, sodaß Transparenz erhalten wird. Diese Transparenz kann auch bei Zusatz von Cl oder Br-haltigen Verbindungen erhalten bleiben, wie z.B. bei Zusatz von Decabromdiphenylether.

Die flammwidrigen Polymermischungen dieser Erfindung lassen sich zu Formkörpern, Platten, Folien, Fasern, und Beschichtungen verarbeiten. Sie lassen sich in Mischungen mit Füllstoffen und Verstärkungsstoffen wie Mineralien und Glasfasern, Ruß, Farbstoffen und Pigmenten, Stabilisatoren, Gleitmitteln und entformungshilfsmitteln verwenden. Sie sind insbesondere dort von Vorteil, wo es auf hohe Flammwidrigkeit bei hoher Wärmestandfestigkeit, hoher Steifigkeit, guter Hydrolysestabilität, hoher Oberflächengüte und guten elektroisoliereigenschaften ankommt. So können sie beispielsweise zur Herstellung von Bauteilen für elektrisch betriebene Geräte wie Gehäuse oder Gehäuseteile und Isolatoren, für stromführende Teile oder zur Herstellung von Bauteilen in Automobilen, z.B. Verkleidungen, Armaturentafeln und Bauteilen in Motorraum verwendet werden.

Gegenstand der vorliegenden Erfindung ist somit auch die Verwendung der Polymerischungen als Überzüge für Formteile oder zur Herstellung von Formteilen.

## Beispiele

### Biespiel 1

In den Beispielen eingesetzte Substanzen

a) *MPC*
2,2-Bis-(3,5-dimethyl-4-hydroxyphenyl)-propan-Polycarbonat, $\eta_{rel}$ = 1,332 (in $CH_2Cl_2$; c = 5 g/l).

b) *MPC—ROH*
Polycarbonat aus einem Rohbisphenol mit 86 Gew.-% 2,2-Bis-(3,5-dimethyl-4-hydroxyphenyl)-propan, unter 0,1 Gew.-% 2,6-Dimethylphenol und 4,9 Gew.-% nicht spezifizierter Komponenten (Rohbisphenol erhalten nach DE—OS 2 928 464, Bsp. 1) $\eta_{rel}$ = 1,621 (in $CH_2Cl_2$; c = 5 g/l).

c) *MPO*
2,2-Bis-(3,5-dimethyl-4-hydroxyphenyl)-propan-polyphosphate hergestellt aus 2,2-Bis-(3,5-dimethyl-4-hydroxyphenyl)-propan und Triphenylphosphat (Verhältnis 0,91/1) mit Na-Phenolat als Katalysator $\eta_{rel}$ = 1,07 (in $CH_2Cl_2$; c = 5 g/l), Glasübergangstemperatur Tg = 84°C.

d) *GV*
Kurzglasfasern

e) *DBDPE*
Decabromdiphenylether

f) *PTFE*
Polytetrafluorethylen, feinteilig

### Beispiele 2—6 Flammwidrige Polymermischungen

Über einen Doppelwellenextruder wurden aus Polycarbonaten Polyphosphaten und Zusatzstoffen wie sie aus der Tabelle Beispiele 2—6 hervorgehen, bei 300°C flammwidrige Polymermischungen erhalten. Das Vergleichspolycarbonat, Bsp. 2, ohne Zusätze, wurde ebenfalls einmal extrudiert. Das MPC—ROH und das MPO des Beispiels 5 wurde über Dichlorbenzollösung und Vakuumextrusion unter Abzug des Chlorbenzols vorgemischt. Die erhalten Polymermischungen wurden über die Schmelze zu Prüfkörpern verarbeitet und geprüft. Die erhaltenen Ergebnisse sind in Tabelle Beispiel 2—6 enthalten.

TABELLE BSP. 2—7:

Flammwidrige Polymermischungen

Bsp. Flammwidrige Polymermischungen

| | Zusammensetzung %/Teile | Eigenschaften Flammwidrigkeit UL Subj. 94 1/16″ | Wärmeformbeständigkeit Vicat B (°C) | Hydrolyse in wäßriger NaOH 10%ig, 400h, 100% |
|---|---|---|---|---|
| 2 | MPC<br>100% | nb | 197 | n |
| 3 | MPC/MPO/PTFE<br>95%/5%/0,2 Teile | VI | 190 | n |
| 4 | MPC/MPO/GV/PTFE<br>95%/5%/45 Teile/0,2 Teile | VO | 193 | n |
| 5 | MPC—ROH/MPO/PTFE<br>66%/34%/0,45 Teile | VO | 159 | n |
| 6 | MPC/MPO/DBDPE/PTFE<br>95%/5%/3 Teile/0,1 Teile | VO | 189 | n |

Teile phr = Teile Additiv pro huntert Teile an Polycarbonat und Polyphosphat
nb = nicht bestanden; n = nicht angegriffen; VO, VI = Flammwidrigkeitsklassen

**Patentansprüche**

1. Flammwidridge Polymermischungen, dadurch gekennzeichnet, daß sie

a) 25—99,5 Gew.-% eines Polycarbonats, dessen lineare Ketten zu mindestens 85 Mol-% aus wiederkehrenden Struktureinheiten der Formel (1)

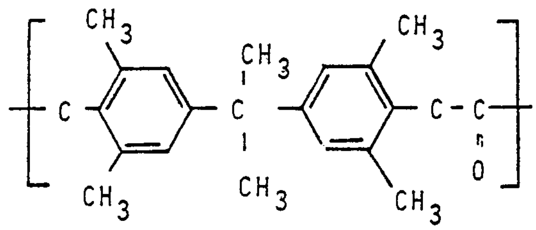 (1),

und zu höchstens 15 Mol-% aus wiederkehrenden Einheiten der Formel (2)

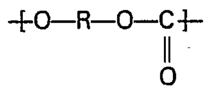 (2),

in der

—R— für o-, m- oder p- oder Phenylenrest oder einen Rest der Formel (2 a) steht,

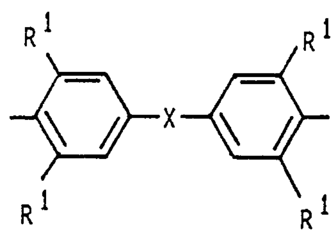 (2a)

in welcher

$R^1$ für Wasserstoff, Halogen und $C_1$—$C_3$-Alkyl steht und

X für einen $C_1$—$C_5$-Alkylen- oder Alkylidenrest, einen $C_2$—$C_6$-Cycloalkylen- oder Cycloalkylidenrest, eine Einfachbindung, —S— oder einen Rest der Formel (2 b) steht,

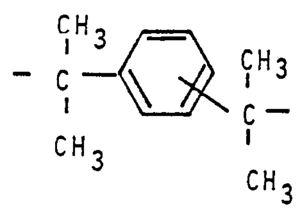 (2b)

in welcher die beiden Alkylsubstituenten in o-, m- oder p-Stellung zueinander stehen können, oder für einen Rest der Formel (2 c) steht,

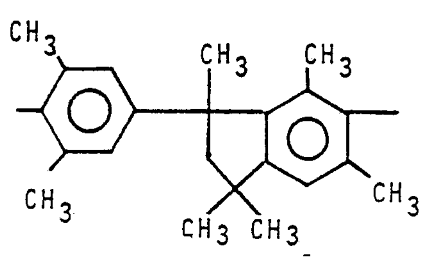 (2c)

wobei Einheiten der Formel (1) nicht umfaßt sind,

b) 0,5 bis 75 Gew.% eines verzweigten Polyphosphats mit Molekulargewichten Mw (gemessen durch Gelchromatographie, Eichung mit Bisphenol-A-Polycarbonat) von 1600 bis 150 000 und relativen Viskositäten von µ rel von 1.01 bis 1.20, erhalten durch Umsetzung von mindestens 60 Mol.% an Bis-(3,5-dimethyl-4-hydroxyphenyl)-methan und/oder Bis-(3,5-dimethyl-4-hydroxyphenyl)-propan und maximal 40 Mol.% an Diolen der Formel 17,

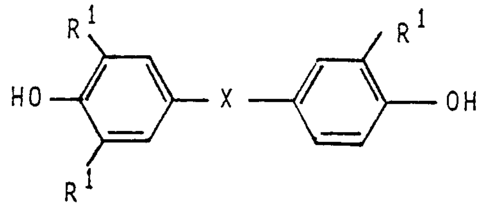

(17)

worin

X einen $C_1$—$C_5$-Alkylen- oder Alkylidenrest, einen $C_5$—$C_6$-Cycloalkylen- oder Cycloalkylidenrest, eine Einfachbindung, —S— oder

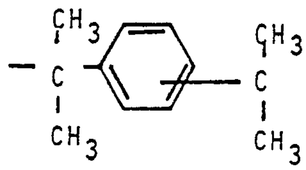

und $R_1$ H oder $CH_3$ bedeutet, und/oder der Formel (18)

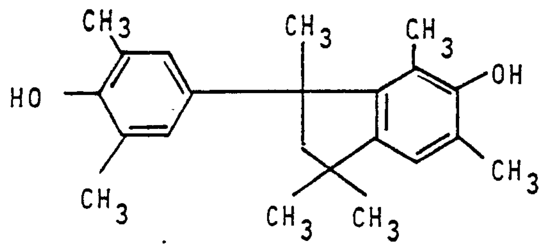

(18)

mit Phosporsäureestern der Formel (19)

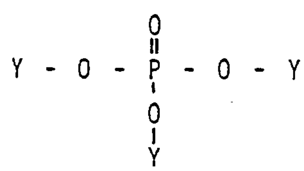

(19)

worin

Y Alkyl-, Cycloalkyl-, Aryl oder Alkylaryl-Reste bedeuten und gleich oder ungleich sein können, in Molverhaltnis aromatisches Diol/Phosphat von 0.66/1 bis 2.3/1 in Gegenwart basischer Alkali- oder Erdalkaliverbindungen unter Abspaltung von Alkohol bzw. Phenol bei Temperaturen von 100°C bis 350°C, und

c) 0—20 Teile einer oder mehrerer organischer Chlor und/oder Bromverbindungen, die nur aromatisch gebundenes Chlor- und/oder Brom enthalten, eine Zersetzungstemperatur oberhalb 250°C aufweisen und bis mindestens 300°C bei Normaldruck nicht sieden, und

d) 0—100 Teile Glasfasern und

e) 0—1 Teil Polytetrafluorethylen

enthalten, wobei sich die Teile der jeweiligen Komponente c, d und e auf die Summe von a) und b) beziehen.

2. Verwendung von Polymermischungen nach Anspruch 1 als Überzüge für Formteile.

3. Verwendung von Polymermischungen nach Anspruch 1 zur Herstellung von Formkörpern.

**Revendications**

1. Mélanges de polymères résistants à la flamme, caractérisés en ce qu'ils contiennent

a) 25 à 99,5% en poids d'un polycarbonate dont les chaînes linéaires sont constitués à 85 moles % au moins de motifs structuraux récurrents de formule (1)

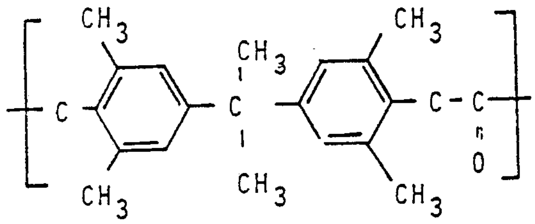

(1)

et à 15 moles % au plus de motifs récurrents de formule (2)

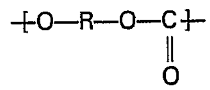

(2)

dans laquelle

—R— représente un reste o-, m- ou p-phénylène ou un erste de formule (2 a)

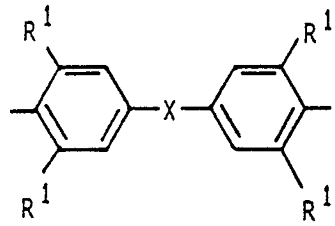

(2a)

dans laquelle

$R^1$ représente l'hydrogène un halogène et un groupe alkyle en $C_1$ à $C_3$, et

X est un reste alkylène ou alkylidène en $C_1$ à $C_5$, un reste cycloalkylène ou cycloalkylidène en $C_3$ à $C_6$, une liaison simple, —S— ou un reste de formule (2 b),

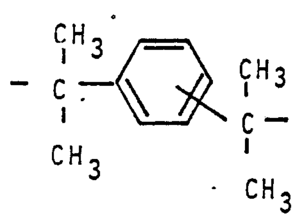

(2b)

dans laquelle les deux substituants alkyle peuvent être en position ortho, méta ou para l'un par rapport à l'autre,

ou un reste de formule (2 c),

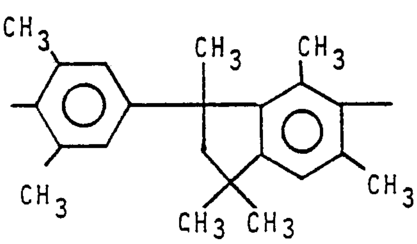

(2c)

auquel cas des motifs de formule (1) ne sont pas compris,

b) 0,5 à 75% en poids d'un polyphosphate ramifié ayant des poids moléculaires Mp (mesurés par chromatographie sur gel, étalonnage au polycarbonate de bisphénol A) de 1600 à 150 000 et des viscosités relatives η rel de 1,01 à 1,20, obtenu par réaction d'au moins 60 moles % de bis-(3,5-diméthyl-4-hydroxyphényl)-méthane et/ou de bis-(3,5-diméthyl-4-hydroxyphényl)-propane et d'un maximum de 40 moles % de diols de formule 17

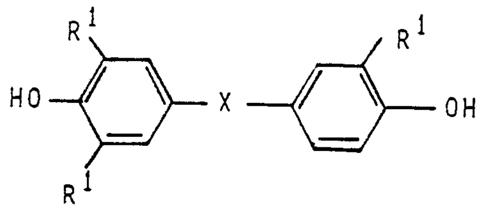

(17)

dans laquelle

X est un reste alkylène ou alkylidène en $C_1$ à $C_5$, un reste cycloalkylène ou cycloalkylidène en $C_5$ ou $C_6$, une liaison simple, —S— ou

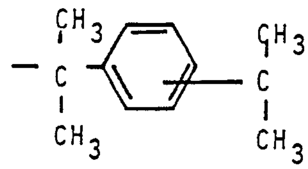

et $R^1$ représente H ou $CH_3$, et/ou de formule (18)

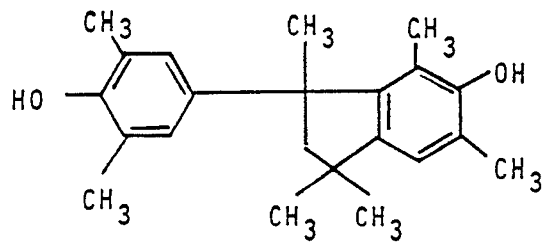

(18)

avec des esters d'acide phosphorique de formule (19)

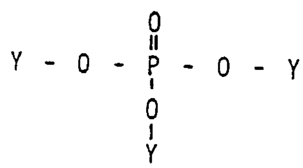

(19)

dans laquelle

Y représente des restes alkyle, cycloalkyle, aryle ou alkylaryle, les restes Y pouvant être identiques ou différents, dans un rapport molaire du diol aromatique au phosphate de 0,66/1 à 2,3/1 en présence de composés basiques alcalins ou alcalino-terreux avec élimination d'alcool ou de phénol à des températures de 100 à 350°C, et

c) 0 à 20 parties d'un ou plusieurs composés organiques chlorés et/ou bromés qui ne contiennent que du chlore et/ou du brome en liaison aromatique, qui présentent une température de décomposition au-dessus de 250°C et qui ne bouillent pas avant 300°C à la pression normale, et

d) 0 à 100 parties de fibres de verre et

e) 0 à 1 partie de polytétrafluoréthylène, les parties des composants c, d et e respectifs se rapportant à la somme des composants a) et b).

2. Utilisation de mélanges de polymères suivant la revendication 1 comme revêtements pour pièces façonnées.

3. Utilisation de mélanges de polymères suivant la revendication 1 pour la production de pièces moulées.

**Claims**

1. Flame-resistant polymer mixtures, characterized in that they contain

a) 25 to 99.5% by weight of a polycarbonate in which at least 85 mol-% of the linear chains consist of recurring structural units corresponding to formula (1)

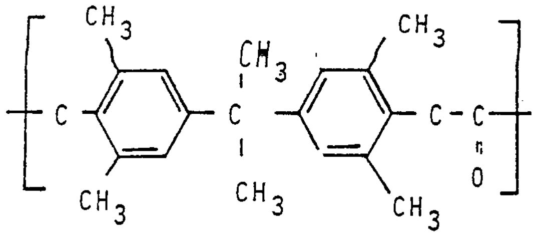

(1)

and at most 15 mol-% of recurring units corresponding to formula (2)

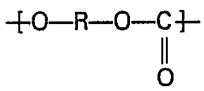

(2)

in which

—R— represents an o-, m- or p-phenylene radical or a radical corresponding to formula (2a)

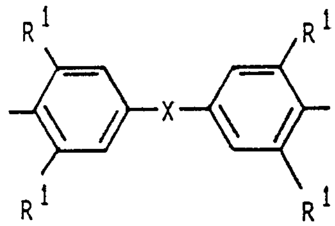

(2a)

in which

$R^1$ represents hydrogen, halogen and $C_1$—$C_3$ alkyl and

X represents a $C_1$—$C_5$ alkylene or alkylidene radical, a $C_3$—$C_6$ cycloalkylene or cycloalkylidene radical, a single bond, —S— or a radical corresponding to formula (2b)

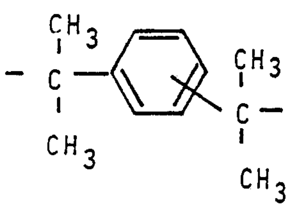

(2b)

in which the two alkyl substituents may be in the o-, m- or p-position to one another, or a radical corresponding to formula (2c)

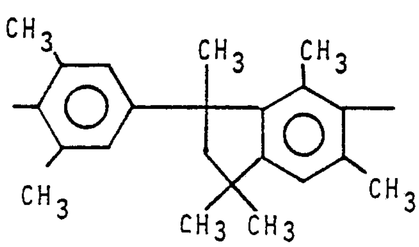

(2c)

excluding units of formula (1),

b) 0.5 to 75% by weight of a branched polyphosphate having molecular weights Mw (as measured by gel chromatography, calibration with bisphenol-A polycarbonate) of 1,600 to 150,000 and relative viscosities $\eta_{rel}$ of 1.02 to 1.20, obtained by reaction of at least 60 mol-% of bis-(3,5-dimethyl-4-hydroxyphenyl)-methane and/or bis-(3,5-dimethyl-4-hydroxyphenyl)-propane and at most 40 mol-% of diols corresponding to formula (17)

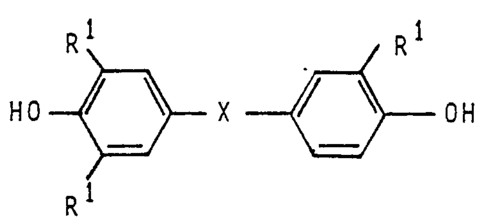

(17)

in which

X is a $C_1$—$C_5$ alkylene or alkylidene radical, a $C_5$—$C_6$ cycloalkylene or cycloalkylidene radical, a single bond, —S— or

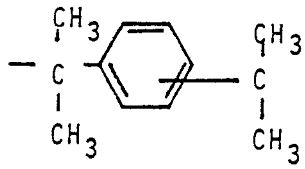

and $R^1$ represents H or $CH_3$, and/or to formula (18)

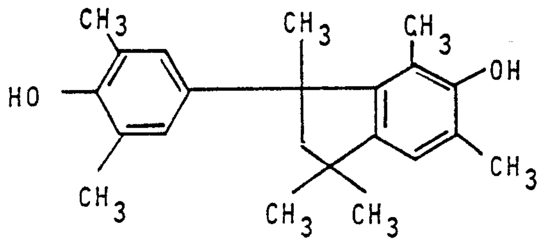

(18)

wth phosphoric acid esters corresponding to formula (19)

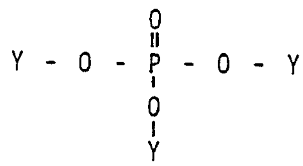

(19)

in which

Y are alkyl, cycloalkyl, aryl or alkylaryl radicals and may be the same or different,

in a molar ratio of aromatic diol to phosphate of 0.66:1 to 2.3:1 in the presence of basic alkali or alkaline-earth metal compounds with elimination of alcohol or phenol at temperatures of from 100 to 350°C and

c) 0 to 20 parts of one or more organic chlorine and/or bromine compounds which contain only aromatically bound chlorine and/or bromine, have a decomposition temperature above 250°C and do not boil up to at least 300°C under normal pressure and

d) 0 to 100 parts glass fibers and

e) 0 to 1 part polytetrafluoroethylene,

the parts of the components c), d) and e) being based in each case on the sum of a) and b).

2. The use of the polymer mixtures claimed in claim 1 as coatings for molded articles.

3. The use of the polymer mixtures claimed in claim 1 for the productionh of molded articles.